# EUROPÄISCHE PATENTSCHRIFT

(11) **EP 1 163 193 B1**
(45) Veröffentlichungstag und Bekanntmachung des Hinweises auf die Patenterteilung: **22.10.2003**
(21) Anmeldenummer: 00988568.2
(22) Anmeldetag: 06.11.2000
(51) Int. Cl.: C04B 14/30, C04B 41/50, B01J 35/02, B01D 53/86

(54) **AUSSENBAUSTOFF FÜR BAUWERKE**
EXTERNAL BUILDING MATERIAL FOR CONSTRUCTIONS
MATERIAU DE CONSTRUCTION EXTERIEUR POUR BATIMENTS

(30) Priorität: 04.11.1999 DE 19954227
(43) Veröffentlichungstag der Anmeldung: 19.12.2001
(73) Patentinhaber: Jager, Johannes, 64807 Dieburg (DE)
(72) Erfinder: JAGER, Johannes, 64807 Dieburg (DE); LUDWIG, Thomas, 64521 Gross-Gerau (DE)
(74) Vertreter: Jungblut, Bernhard Jakob, Dr.
(86) Internationale Anmeldenummer: DE0003920
(87) Internationale Veröffentlichungsnummer: WO01032582

(56) Entgegenhaltungen:
- WO-A-98/05601
- DE-A- 1 471 171
- PATENT ABSTRACTS OF JAPAN vol. 1997, no. 11, 28. November 1997 (1997-11-28) & JP 09 192496 A (MATSUSHITA ELECTRIC WORKS LTD), 29. Juli 1997 (1997-07-29)
- DATABASE WPI Section Ch, Week 198115 Derwent Publications Ltd., London, GB; Class L02, AN 1981-26905D XP002164185 & SU 753 823 A (KAZAN ENG-CONS INST), 10. August 1980 (1980-08-10)

## Beschreibung

Die Erfindung betrifft einen Außenbaustoff für Bauwerke mit einem Strukturteil und mit einer für den katalytischen Abbau von Luftschadstoffen aktivierten Außenoberfläche, wobei die Außenoberfläche einen katalytisch aktiven Feststoff trägt und wobei der katalytisch aktive Feststoff im Volumen des Strukturteils homogen verteilt ist.

Der Begriff des Bauwerks bezeichnet Gebäude im weitesten Sinne. Hierunter fallen insbesondere Gebäude für Wohnzwecke sowie für gewerbliche Zwecke, wie Einfamilienhäuser, Mehrfamilienhäuser, Firmengebäude, Fabrikhallen u.dgl., aber auch Bauwerke aus dem Bereich des Verkehrswesens, wie Brücken u.dgl., Ebenfalls umfaßt sind Konstrukte künstlerischer Natur, wie beispielsweise Denkmäler, Skulpturen u.dgl.. Der Begriff des Außenbaustoffs bezeichnet Bauelemente zur Errichtung von Bauwerken, wobei zumindest ein Teil der Oberfläche des Bauelementes eine äußere Sichtfläche des Bauwerks bildet. Der Begriff der Außenbaustoffe umfaßt aber neben den Bauelementen auch Außenputze u. dgl., wobei dann die Außenoberfläche erst im Zuge des Auftrages gebildet wird. Mit anderen Worten ausgedrückt, ein Außenbaustoff bildet zumindest zum Teil eine äußere Sichtfläche des Bauwerks. Ein Strukturteil eines Außenbaustoffs übt die mechanische und/oder optische Funktion des Außenbaustoffes aus. Ein Außenbaustoff kann, muß aber nicht notwendigerweise, im Rahmen eines Bauwerks statische Funktionen ausüben. Insofern kann ein Außenbaustoff auch rein protektiv und/oder dekorativ eingesetzt sein. Typische Außenbaustoffe sind beispielsweise Bausteine, Ziegel, Betonelemente, Dachelemente, insbesondere Dachpfannen, Verkleidungselemente, Verblendelemente und Putze. Die Außenoberfläche des Außenbaustoffs bildet beim fertigen Bauwerk die äußere Sichtfläche.

Ein besonderes Problem, insbesondere in städtischen Gebieten, stellt die Immission von Luftschadstoffen dar. In der Umwelttechnik können umweltrelevante Luftschadstoffe unter hohem Einsatz von Technik, Energie und Kosten auf ein erträgliches Niveau reduziert werden. Hierbei sind einerseits Maßnahmen zu nennen, die bereits das Entstehen von Luftschadstoffen minimieren, wie beispielsweise der sogenannte Magermotor, und andererseits Maßnahmen, die in einem bereits entstandenen Abgas den Schadstoffgehalt reduzieren, wie beispielsweise der Kraftfahrzeugkatalysator. Restemissionen müssen dennoch in praktisch allen Fällen hingenommen werden. Diese Restemissionen können aber durchaus noch ausreichen, um gesundheitliche Schäden zu verursachen. Als besonders relevante Luftschadstoffe sind zu nennen NOₓ, VOC (flüchtige organische Verbindungen), Ozon, Schwefeloxide, und CO.

Baustoffe der eingangs genannten Art sind aus den Literaturstellen JP 11100908, JP 113032267 und JP 6278241 bekannt. Die Verteilung von Katalysatoren in Baustoffen zur Herstellung von Gasbeton ist in der Literaturstelle DE 1 471 171 und "Database WPI Section Ch, Week 198115 Derwent Publications Ltd., London GB; Class L02, AN 1981-26905D XP002164185 & SU 753 823 A (Kazan Eng-Cons Inst), 10. August 1980)" offenbart. Der Einsatz von Photokatalysatoren zur Erzeugung eines Selbstreinigungseffektes bei Haushaltsgeräten ist in der Literaturstelle "Patent Abstracts of Japan vol. 1997, no.11, 28. November 1997 & JP 09 192496 A ( Matsushita Electrics Works LDT) 29. Juli 1997" beschrieben. Die Literaturstelle WO 98 05601 A nennt eine Reaktion von Luftschadstoffen an Katalysatoroberflächen aus vorzugsweise TiO₂ im Rahmen eines Baustoffes.

Nachteilig bei den insofern bekannten Baustoffen ist einerseits, daß die katalytische Aktivität insbesondere im Falle von Katalysatoren mit niedrigem spektralem Absorptionsgrad, wie TiO₂, hinsichtlich der Umsatzraten unbefriedigend ist. Andererseits nachteilig ist, daß die Katalysatoren durch in der Luft enthaltene Katalysatorgifte inaktiviert werden können und zudem aufgrund der Anordnung lediglich an der Oberfläche des Baustoffes im Zuge der (Mikro-) Erosion vollständig entfernt werden, wenn die den Katalysator tragende Oberflächenschicht erosionsbedingt abgetragen wird.

Demgegenüber liegt der Erfindung das technische Problem zugrunde, einen Außenbaustoff anzugeben, welcher dauerhaft und mit dauerhaft hohen Umsatzraten eine heterogen katalytische Reinigung der Luft von Schadstoffen gewährleistet.

Zur Lösung dieses technischen Problems lehrt die Erfindung einen Außenbaustoff nach Anspruch 1. Bezüglich der Definition des Absorptionsgrades wird auf Hütte, die Grundlagen der Ingenieurwissenschaften, 30. Auflage, 1996, Springer Verlag, Kapitel B208, 20.2, verwiesen. Die vorstehenden Werte beziehen sich dabei auf solare Strahlung bzw. deren Spektrum. Als homogen ist eine Verteilung von katalytisch aktiven Feststoffpartikeln bezeichnet, wenn die Partikeldichte, gemessen als Anzahl der Partikel je Volumeneinheit, beispielsweise je cm³, um weniger als 80%, vorzugsweise weniger als 50%, besser weniger als 20%, schwankt, und zwar in jeder Raumrichtung. Der Begriff der Verteilung im Volumen bezieht sich auf das Festkörpervolumen des Strukturteils, i.e. der Großteil der Feststoffpartikel ist im Material der Strukturteils eingebettet bzw. hiervon ummantelt und aus dem Gasraum folglich nicht zugänglich (ungeachtet eventueller Porosität des Strukturteils; innere Oberflächen zählen nicht zum Festkörpervolumen). Lediglich ein (eher kleiner) Anteil der Feststoffpartikel ist an Oberflächen (äußeren oder inneren Oberflächen des Strukturteils) vom Gasraum aus zugänglich.

Die Erfindung geht zunächst aus von der Erkenntnis, daß eine bessere Umsatzrate bei erhöhten Temperaturen der Katalysatorpartikel (nicht notwendigerweise des Strukturteils) erzielt werden kann. Wenn der Absorptionsgrad der Katalysatorpartikel hinreichend hoch ist, so erwärmen sich die Katalysatorpartikel durch die solare Einstrahlung und somit steigen die Umsatzraten exponentiell an. Bereits vergleichsweise geringe Temperaturerhöhungen der Partikel führen zu beachtlich höheren Raten. Hinzu kommt bei der erfindungsgemäßen Kombination der Merkmale, daß der Baustoff bzw. dessen katalytisch aktive Oberfläche durch die stets stattfindende (Mikro-) Erosion, bedingt durch Sonneneinstrahlung in Verbindung mit Nässe, Wind und Temperaturwechsel auch stets erneuert wird und so einerseits eine Entfernung vergifteter und folglich unwirksamer Katalysatorpartikel und andererseits eine Freilegung frischer Katalysatorpartikel erfolgt.

Letzendlich wird durch die Optimierung der Umsatzraten sowie deren langanhaltend dauernden Aufrechterhaltung eine beachtliche Verbesserung des Mikroklimas, bezogen auf den Luftschadstoffgehalt, im Bereich des Bauwerks erzielt werden kann. Eine weitere Optimierung der Oberflächengestaltung kann einerseits durch Erhöhung der spezifischen, der bauwerkaußenseitigen Gasphase ungehindert zugänglichen Oberfläche durchgeführt werden. Werden eine größere Vielzahl von Bauwerken mit erfindungsgemäßen Außenbaustoffen gestaltet, so wirken diese Bauwerke gleichsam einem heterogenen Katalysator mit gigantischer Gesamtoberfläche mit der Folge, daß die absolute Umsatzrate (nicht bezogen auf die Oberflächeneinheit) sehr beachtlich wird. Die große Gesamtoberfläche entsteht beispielsweise durch Nutzung erfindungsgemäßer Außenbaustoffe für Dachflächen und/oder Fassaden, insbesondere sonnenzugewandten Flächen eines Bauwerks. Ein besonderer Vorteil der Erfindung ist, daß der zusätzliche Aufwand bei der Ausstattung von Außenbaustoffen mit für den katalytischen Abbau von Luftschadstoffen aktivierten Außeroberflächen gegenüber den Kosten der Baustoffherstellung praktisch kaum ins Gewicht fällt und so mit erfindungsgemäßen Baustoffen eine Luftreinigung zu äußert wirtschaftlichen Bedingungen erfolgt.

Unter der Annahme einer Umsatzkinetik 1. Ordnung, iterativer Angleichung der Meßwerte nach dem Marquarden-Verfahren an die theoretische Umsatzkurve und einer Normierung der Halbwertszeit der Konzentrationskurve eines gegebenen Schadstoffes ausgehend von einer vorgegebenen Anfangskonzentration auf 1 für einen Baustoff ohne katalytisch aktivierende Ausstattung ("normaler" Baustoff) haben erfindungsgemäße Baustoffe eine relative Halbwertszeit von weniger als 0,8, vorzugsweise weniger als 0,4, höchstvorzugsweise weniger als 0,35, bei 30 °C. Bei 80 °C ist die relative Halbwertszeit, bezogen auf den 30 °C Wert des "normalen" Baustoffs, weniger als 0,08, vorzugsweise weniger als 0,035, höchstvorzugsweise weniger als 0,02.

Die innere Oberfläche des Außenbaustoffs, gemessen als Porosität nach BET mit N₂, kann in einem Bereich von 5 bis 70%, vorzugsweise 15 bis 70%, höchst vorzugsweise von 35 bis 60%, betragen. Eine hohe Porosität ist bei gebrannten Baustoffen beispielsweise durch Zugabe von im Zuge des Brennens verdampfenden Zuschlägen zum zu brennenden Ausgangsmaterial möglich. Es ist ebenfalls möglich, durch geeignete Körnung des zu brennenden Materials eine erhöhte Oberflächenrauhheit einzurichten. Analoges gilt sinngemäß für Putze. Schließlich ist es möglich, die Oberfläche an fertigen Bauwerk mittels mechanischer Mittel aufzurauhen. Beispielsweise Beton weist eine Porosität (gemessen mittels der Hg-Druckmethode, siehe K Wesche, "Baustoffe für tragende Bauteile", Bd. 2, "Beton und Mauerwerk", 1985) von lediglich 1 bis 1,8% auf. Zwar werden an inneren Oberflächen liegende Katalysatorpartikel nicht notwendigerweise auf die gleiche Temperatur wie sonnenbestrahlte Katalysatorpartikel erwärmt, eine gewisse Erwärmung tritt jedoch auch über die Erwärmung des Volumens des Außenbaustoffs auch auf. Jedenfalls wird im Falle poröser Außenbaustoffe eine Kombination von temperaturbedingt hohen Umsatzraten im Einstrahlungsbereich und oberflächenbedingten ebenfalls beachtlichen Umsatzraten an inneren Oberflächen des Außenbaustoffes erreicht.

Insbesondere kann das Material der Katalysatorpartikel aus der Gruppe bestehend aus "TiO₂, insbes. Rutil und Anatas, vorzugsweise Fe₃O₄, Cr₂O₃, V₂O₅, MnO₂, CoO, Co₃O₄, NiO, Cu₂O, CuO, ZnO, ZrO₂, MoO₃, CdO, La₂O₃, Y₂O₃, NbO₅, TaO₅, WO₂, WO₃, Wolframblauoxid (W₁₈O₄₉, W₂₀O₅₈), SnO, SnO₂, α-Al₂O₃, Mischoxide der vorstehenden Verbindungen, Edelmetall-Graphit-Intercalationsverbindungen (z.B. auf Basis Au, Pt, Pd, Rh), Aktivkohle, Aktivkoks, Zeolithe und Mischungen der vorstehenden Substanzen" ausgewählt sein. Durch geeignete Auswahl des Katalysatormaterials läßt sich die katalytische Aktivität unter den gegebenen Bedingungen und gegebenenfalls unter Abstimmung auf bestimmte Luftschadstoffe optimieren. Grundsätzlich ist es wünschenswert, daß der Katalysator an der Oberfläche immobilisiert ist, i.e. nicht durch Regenwasser und übliche mechanische Einwirkungen abgelöst werden kann. Dies gilt insbesondere bei potentiell toxischen Stoffen. Vorzugsweise werden Katalysatoren verwendet, welche in toxischer Hinsicht unbedenklich sind, wie beispielsweise Eisenoxide.

Ein erfindungsgemäßer Außenbaustoff ist erhältlich durch Herstellung einer Mischung von Strukturmaterial mit einer Katalysatorzubereitung und anschließender Herstellung des Außenbaustoffes aus der erhaltenen Mischung. Es wird also im Kern das übliche Herstellungsverfahren eines Außenbaustoffes beibehalten, wobei vor einem abschließenden formgebenden Verfahrensschritt und der Härtung eine homogene Vermischung von Strukturmaterial und Katalysatorzubereitung bewirkt wird.

Als Katalysatorzubereitung sind feste oder flüssige Mischungen bezeichnet, welche die katalytisch aktive Substanz in Reinform, in Festkörpermischung, in Lösung oder in Suspension enthalten, und zwar als fertigen Katalysator oder als Katalysatorvorstufe, welche sich (beispielsweise im Zuge einer Brennverfahrensstufe) in den fertigen Katalysator umwandelt bzw. hierzu abreagiert. Im Falle von Lösungen oder Suspensionen ist die flüssige Phase vorzugsweise wäßrig, höchstvorzugsweise frei von organischen Lösungsmitteln. Es möglich, daß eine solche Mischung bzw. Lösung sogenannte Promotoren enthält, welche die Katalysatorwirkung verstärken. Beispiele für im Rahmen der Erfindung geeignete Promotoren sind K₂O, CaO, MgO, α-Al₂O₃ und SiO₂. Weiterhin können die Mischungen bzw. Lösungen auch Substratmaterialien enthalten, welche als oberflächenreiche bzw. -vergrößernde Trägersubstanz wirken und welche eine Sinterung und damit eine Verkleinerung der Oberfläche verhindern oder reduzieren. Die katalytisch aktive Substanz liegt dabei im fertigen Außenbaustoff als Partikel vor mit einer mittleren Partikelgröße, gemessen mittels Siebreihen, im Bereich von 0,01 µm bis 1 mm, vorzugsweise im Bereich von 0,1 µm bis 0,1 mm, höchstvorzugsweise im Bereich von 1 µm bis 50 µm. Die Partikelgröße kann bereits in der Katalysatorzubereitung eingestellt sein, es ist jedoch auch möglich, diese erst durch Vermahlen der Mischung aus Katalysatorzubereitung und Strukturmaterial einzustellen.

Die Erfindung lehrt auch ein Verfahren zur Reduktion von Luftschadstoffen, wobei ein Bauwerk unter Verwendung eines erfindungsgemäßen Außenbaustoffs erstellt wird und wobei die Luftschadstoffe an der katalytisch aktiven Außenfläche des Außenbaustoffs, gegebenenfalls unter Aktivierung durch Sonnenlicht, abgebaut werden. Schließlich lehrt die Erfindung die Verwendung eines erfindungsgemäßen Außenbaustoffs zur Herstellung eines luftschadstoffabbauenden Bauwerks sowie ein Bauwerk mit einer durch einen erfindungsgemäßen Baustoff zum katalytischen Abbau von Luftschadstoffen aktivierten Außenoberfläche.

Mit erfindungsgemäßen Außenbaustoffen lassen sich insbesondere NOₓ vermindern. Die hierbei an der katalytisch aktiven Oberfläche stattfindenden Reaktionen sind folgend wiedergegeben.

CₘHₙ + (m+n/4)O₂ = m CO₂ + n/2H₂O (1)

2CO + O₂ = 2 CO₂ (2)

2H₂ + O₂ = 2H₂O (3)

2CO + 2NO = N₂ + 2 CO₂ (4)

CₘHₙ + 2 (m+n/4) NO = (m+n/4)N₂ + n/2H₂O + mCO₂ (5)

2H₂ + 2NO = N₂+2H₂O (6)

2SO₂ + O₂ = 2SO₃ (7)

5H₂ + 2NO = 2NH₃ + 2H₂O (8)

SO₂ + 3H₂ = H₂S + 2H₂O (9)

NH₃ + CH₄ = HCN + 3H₂ (10)

CO + H₂O = CO₂ + H₂ (11)

CₘHₙ + 2mH₂O = mCO₂ + (2m+n/2)H₂ (12)

Hierbei stellen die Reaktionen 7 bis 10 Nebenreaktionen dar. Im Rahmen der Erfindung lassen sich aber auch Ozonund Kohlenwasserstoff-Immissionen reduzieren. Weiterhin ist es möglich, daß die katalytisch aktive Oberfläche gleich mehrere Luftschadstoffe abbaut (multifunktioneller Katalysator). So kann der Abbau von NOₓ z.B. chemisch derart erfolgen, daß die in der Luft enthaltenen Schadstoffe CO und VOC als Reduktionsmittel dienen. Die diesbezüglichen Reaktionen sind:

2NOₓ + nCO = N₂ + nCO₂ (13)

2NOₓ + CₓH_{y} = N₂ + CO₂ + H₂O (14)

Im folgenden wird die Erfindung anhand von lediglich Ausführungsbeispiele darstellenden Ausführungsformen näher erläutert.

### Beispiel 1: Versuchsapparatur

Für die Versuchsdurchführung wurde ein gasdichter Reaktor mit einem Gesamtvolumen von 0,32 m³ entwickelt. Dieser Reaktor umfaßt im wesentlichen ein Reaktorbehältnis, welches einen Außenbaustoff aufnehmen und mit einem Luftschadstoff, beispielsweise NOₓ, (in Luft) begast werden kann, und zwar mit einer definierten Anfangsmenge an Luftschadstoff, beispielsweise 8 ppm. Diese definierte Anfangsmenge reagiert im Zuge katalytischer Reaktionen ab. Teil des Reaktorvolumens bzw. an den bestrahlbaren Teil des Reaktors angeschlossen ist ein Kühlkreislauf, welcher das im Reaktor enthaltende Gas auf konstant 30° hält. Mit einer Tageslichtlampe kann ein im Reaktorbehältnis angeordneter Außenbaustoff angestrahlt werden. Die auf dem untersuchten Baustoff ankommende Beleuchtungsstärke betrug etwa 25000 lx (Lux), ein Wert der noch um ca. 75% unter der Beleuchtungsstärke natürlichen Sonnenlichts im Sommer liegt. In der Praxis werden daher gegenüber der Versuchsdurchführung erheblich verbesserte Werte erwartet. NOₓ-Messungen wurden mit Hilfe eines Chemolumineszenzdetektors durchgeführt. Referenzmessungen wurden durchgeführt mit leerem Reaktorbehältnis (mit/ohne Licht: Hell- und Dunkelmessung) sowie mit unbeschichteten Außenbaustoffen.

Es wurden Messung bei einer Temperatur des Außenbaustoffes von 30 °C und bei 80 °C durchgeführt. Hierzu kann der Außenbaustoff über eine implantierte, elektronisch geregelte elektrische Heizung erwärmt werden. Dies ist erforderlich, da die Bestrahlung mit einer Lampe den Außenbaustoff mangels Strahlungsleistung nicht hinreichend zu erwärmen vermag. Die Erwärmung wurde bei den erfindungsgemäß eingesetzten katalytisch aktiven Feststoffen, i.e. mit hohem Absorptionsgrad, aktiviert. Bei Vergleichsmessungen mit TiO₂ wurde dagegen nicht erwärmt, da dieses aufgrund des sehr kleinen Absorptionsgrades sich nicht nennenswert in Sonnenlicht erwärmen würde.

### Beispiel 2: NOx-Abbau an Dachsteinen mit katalytisch aktivierter Oberfläche

Dachsteine wurden mit aus Rauchgasreinigungssystemen bekannten Katalysatoren durch Beschichtung mit Katalysatorpartikeln versehen. Dies erfolgte der Einfachheit halber, da bei einem Vergleich der Umsatzraten im Laborexperiment der Gesichtpunkt der Katalysatorgifte sowie der Erosion unbeachtlich ist. Aufgrund der erosionsbedingten kontinuierlichen "Freisetzung" frischer Kalaysatorpartikel bei einem erfindungsgemäßen Baustoff werden auch bei einem bewitterten erfindungsgemäßen Baustoff in der Praxis die Ergebnisse der folgenden Laborexperimente erreicht, und zwar dauernd. Beschichtet wurden Dachsteine der Firma Braas Dachsysteme GmbH & Co., Modell "Frankfurter Pfanne" (rot). Die Beschichtung der Dachsteine erfolgte durch Aufstreichen einer wässrigen KatalysatorSuspension, durch Aufstreichen entsprechender Metallhydroxide und anschließendem Glühen des Dachsteins bzw. durch Aufstreichen der entsprechenden Ammoniummetallate und anschließendem Glühen. Die verwendeten Katalysatoren waren im einzelnen: Fe₂O₃/Cr₂O₃ (50:50, bezogen auf die Gewichte), V₂O₅, WO₃ und TiO₂.

Die Ergebnisse werdern anhand der folgenden Figuren im einzelnen erläutert. Es zeigen:
- Fig. 1:: Eine Messung im leeren Reaktor ohne Licht (Dunkelmessung, 30 °C),
- Fig. 2:: Eine Messung im leeren Reaktor mit Licht (Hellmessung, 30 °C) und
- Fig. 3:: NOₓ-Abbau an katalytisch aktivierten Dachsteinen (Hellmessung, 30 °C).
- Fig. 4:: NOₓ-Abbau an mit WO₃ katalytisch aktivierten Dachsteinen (Hellmessung, Leermessung, 30 °C, 80 °C).

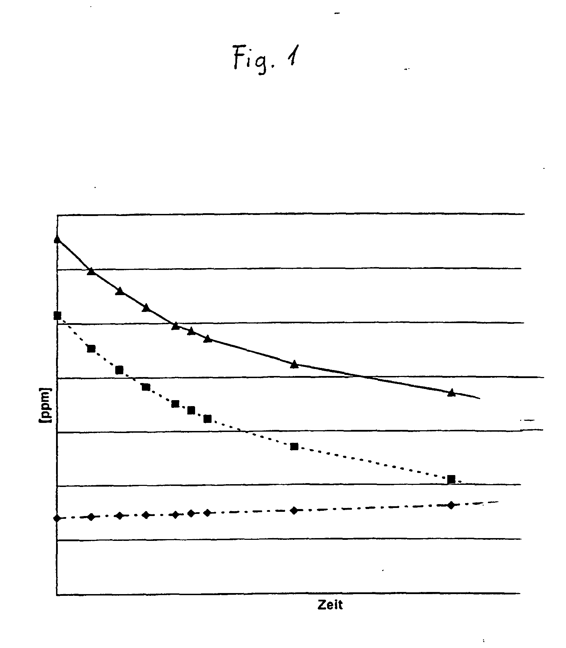

In der Figur 1 erkennt man einen langsamen Abbau der NOₓ-Konzentration. Deutlich zu erkennen ist, daß die Komponente NO₂ abgebaut wird und damit die eigentliche NOx-Minderung bewirkt. Dieses Ergebnis steht im Einklang mit bisherigen Untersuchungen.

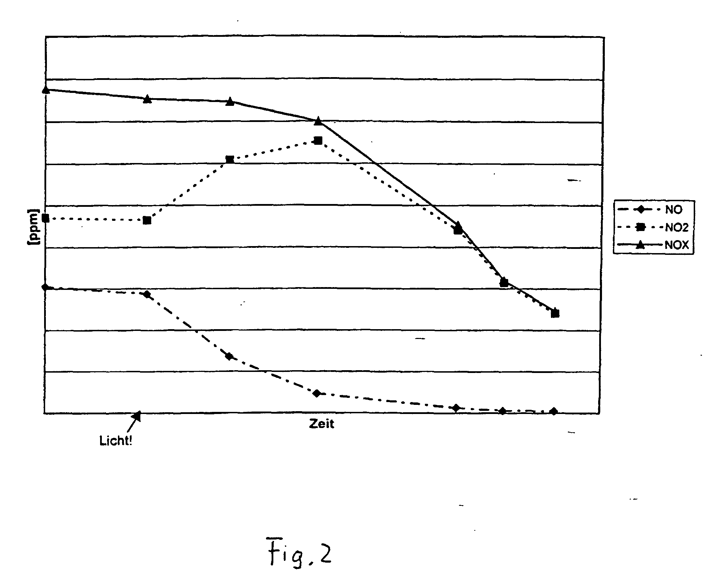

In der Darstellung gemäß Figur 2 wurde die Tageslichtlampe anschließend an eine 70-minütige Dunkelmessung eingeschaltet. Man erkennt den Einsatz der Reaktionen mit dem jeweiligen zweiten Meßpunkt. Man sieht, daß bei der Anwesenheit von Tageslicht der NOₓ-Abbau beschleunigt wird. Auch hier wird nur die Komponente NO₂ abgebaut. Weiterhin aktiviert offenbar das Tageslicht die Oxidation von NO zu NO₂, was deutlich am Abbau von NO und gleichzeitigem Anstieg von NO₂ zu erkennen ist.

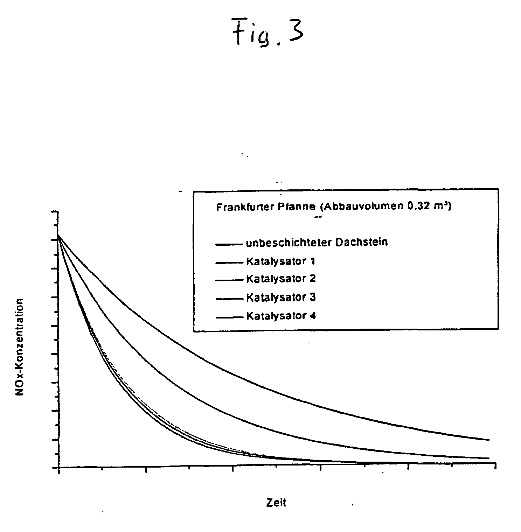

In der Figur 3 sind die Ergebnisse der Messungen mit verschiedenen beschichteten Dachsteinen im Vergleich zu einem unbeschichteten Dachstein dargestellt. Die dargestellte Zeitachse überdeckt einen Zeitraum von t=0 bis t= 500 min. und sind bei 30 °C durchgeführt. Die dargestellte Ordinate überdeckt Konzentrationen von 0 ppm bis 9 ppm. Katalysator 1 steht für: Fe₂O₃/Cr₂O₃ (50:50, bezogen auf die Gewichte). Katalysator 2 steht für : V₂O₅. Katalysator 3 steht für: WO₃. Katalysator 4 steht für: TiO₂. Man erkennt in allen Fällen, daß die Abbaukurven beschichteter Dachsteine deutlich unterhalb jener des unbeschichteten Dachsteins verlaufen. Dies bedeutet, daß die Umsatzraten deutlich erhöht sind. Die erhaltenen Meßpunkte des NOₓ-Abbaus lassen sich hierbei gut an eine Reaktionsgleichung erster Ordnung mit Hilfe des Marquardsen-Verfahren iterativ angleichen. Aus den erhaltenen Geschwindigkeitskoeffizienten wurden die Halbwertszeiten des NOₓ-Abbaus bestimmt und miteinander verglichen. Bezogen auf den unbeschichteten Dachstein (=1) ergeben sich die folgenden Werte: Für den Katalysator 1 0,60, für den Katalysator 2 0,36, für den Katalysator 3 0,32 und für den Katalysator 4 0,34.

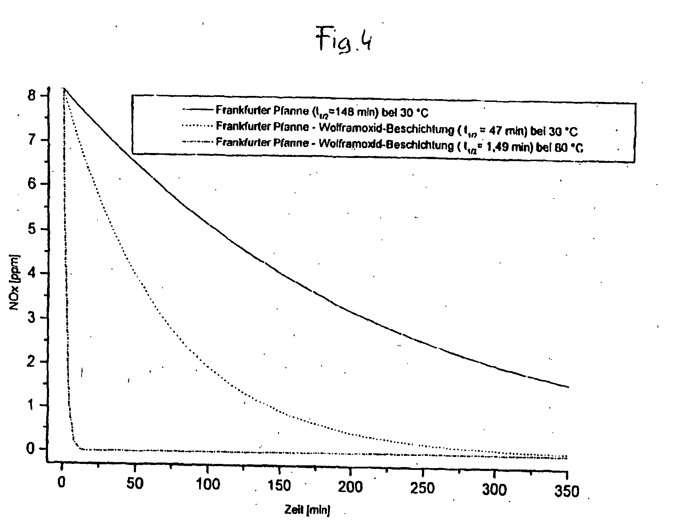

Die Figur 4 zeigt für den Katalysator 3 (WO₃) die beachtliche Steigerung der Umsatzraten aufgrund der Erwärmung von 30 °C auf 80 °C. Die relative Halbwertszeit des NOₓ-Abbaus ist von 0,32 bei 30 °C auf 0,01 bei 80 °C reduziert.

Während eine Bestrahlung von Katalysator 4 (TiO₂) mit Sonnenlicht (mittag, Sommer, Deutschland) aufgrund des geringen Absorptionsgrades zu einer Temperaturerhöhung von kaum 10 °C und folglich nur vergleichsweise hoheren Umsatzraten führt, erreicht Karalysator 3 aufgrund seines hohen Absorptionsgrades bei gleichen Bestrahlungsbedingungen 80 °C und mehr. Im Ergebnis werden mittels Katalysator 3 an einem Sommertag gegenüber Katalysator 4 dramatisch erhöhte Umsatzraten erreicht.

## Patentansprüche

1. Außenbaustoff für Bauwerke mit einem Strukturteil und mit einer für den katalytischen Abbau von Luftschadstoffen aktivierten Außenoberfläche, wobei die Außenoberfläche einen katalytisch aktiven Feststoff trägt und wobei der katalytisch aktive Feststoff im Volumen des Strukturteils homogen verteilt ist,
**dadurch gekennzeichnet,**
**dass** der katalytisch aktive Feststoff einen Absorptionsgrad von zumindest 0,8 aufweist,
**dass** der katalytisch aktive Feststoff eine mittlere Partikelgröße von 0,01 µm bis 1 mm aufweist, und
**dass** der katalytisch aktive Feststoff erhöhte Umsatzraten bei Erwärmung durch solare Einstrahlung aufweist.

2. Außenbaustoff nach Anspruch 1, wobei die katalytisch aktive Oberfläche, gemessen als Porosität nach BET mit N₂, in einem Bereich von 5 bis 70%, vorzugsweise 15 bis 70%, höchst vorzugsweise von 35 bis 60%, beträgt.

3. Außenbaustoff nach einem der Ansprüche 1 oder 2, wobei die katalytisch aktive Außenoberfläche einen Katalysator aus der Gruppe bestehend aus "Fe₃O₄, MnO₂, Co₃O₄, NiO, CuO, CdO, Wolframblauoxid (W₁₈O₄₉, W₂₀O₅₈), SnO, Mischoxide der vorstehenden Verbindungen, Edelmetall-Graphit-Intercalationsverbindungen, insbesondere auf Basis Au, Pt, Pd, Rh, Aktivkohle, Aktivkoks und Mischungen der vorstehenden Substanzen" enthält.

4. Außenbaustoff nach einem der Ansprüche 1 bis 3, wobei der Außenbaustoff erhältlich ist durch Herstellung einer Mischung von Strukturmaterial mit einer Katalysatorzubereitung und anschließender Herstellung des Außenbaustoffs aus der erhaltenen Mischung.

5. Verwendung eines Außenbaustoffs nach einem der Ansprüche 1 bis 4 zur Herstellung eines luftschadstoffabbauenden Bauwerks.

## Claims

1. An external building material for constructions, comprising a structural portion and an external surface activated for the catalytic disintegration of harmful substances in the air, the external surface carrying a catalytically active solid substance, and the catalytically active solid substance being homogeneously distributed in the volume of the structural portion,
**characterized by** that the catalytically active solid substance has an absorption degree of at least 0.8,
that the catalytically active solid substance has a mean particle size of 0.01 µm to 1 mm, and
that the catalytically active solid substance has increased reaction rates when heated by solar irradiation.

2. An external building material according to claim 1, wherein the catalytically active surface, measured as the porosity according to BET with N₂, is in the range from 5 to 70%, preferably 15 to 70%, most preferably 35 to 60%.

3. An external building material according to one of claims 1 or 2, wherein the catalytically active surface contains a catalyst from the group consisting of "Fe₃O₄, MnO₂, Co₃O₄, NiO, CuO, CdO, tungsten blue oxide (W₁₈O₄₉, W₂₀O₅₈), SnO, mixed oxides of the above compounds, noble metal-graphite intercalation compounds, in particular on the basis of Au, Pt, Pd, Rh, activated carbon, activated coke and mixtures of the above substances".

4. An external building material according to one of claims 1 to 3, wherein the external building material is obtainable by producing a mixture of structural material with a catalyst preparation and subsequent production of the external building material from the obtained mixture.

5. The use of an external building material according to one of claims 1 to 4 for producing a building disintegrating harmful substances in the air.

## Revendications

1. Matériau de construction extérieur pour bâtiments, comprenant une partie structurale et une surface extérieure activée pour la dégradation catalytique de produits de pollution atmosphérique, la surface extérieure portant une matière solide catalytiquement active, et la matière solide catalytiquement active étant répartie homogènement dans le volume de la partie structurale,
**caractérisé en ce**
**que** la matière solide catalytiquement active a un degré d'absorption d'au moins 0,8,
**que** la matière solide catalytiquement active comporte une grandeur de particules de 0,01 µm à 1 mm, et
**que** la matière solide catalytiquement active a une réactivité augmentée lors du chauffage par irradiation solaire.

2. Matériau de construction extérieur pour bâtiments selon la revendication 1, **caractérisé en ce que** la surface extérieure catalytiquement active, par mesurage de la porosité selon BET avec N₂, est dans une gamme de 5 à 70%, de préférence de 15 à 70%, de préférence la plus haute de 35 à 60%.

3. Matériau de construction extérieur pour bâtiments selon une des revendications 1 ou 2, **caractérisé en ce que** la surface extérieure catalytiquement active comprend un catalyseur du groupe consistant en "Fe₃O₄, MnO₂, Co₃O₄, NiO, CuO, CdO, oxyde bleu de tungstène (W₁₈O₄₉, W₂₀O₅₈), SnO, oxydes mélangés des composés ci-dessus, composés d'intercalation métal précieux-graphite, en particulier sur la base d'Au, Pt, Pd, Rh, carbone actif, coke actif et mélanges des substances ci-dessus".

4. Matériau de construction extérieur pour bâtiments selon une des revendications 1 à 3, ce matériau de construction extérieur étant obtenu par la production d'un mélange de la matière structurale avec une préparation de catalyseur et la production suivante du matériau de construction extérieur à partir du mélange obtenu.

5. Utilisation d'un matériau de construction extérieur pour bâtiments selon une des revendications 1 à 4 pour la production d'un bâtiment dégradant les produits de pollution atmosphérique.
